# EUROPÄISCHE PATENTSCHRIFT

(11) **EP 0 458 155 B1**
(45) Veröffentlichungstag und Bekanntmachung des Hinweises auf die Patenterteilung: **28.12.1994**
(21) Anmeldenummer: 91107675.0
(22) Anmeldetag: 11.05.1991
(51) Int. Cl.: H05B 37/03

(54) **Verfahren und Anordnung zur zentralen Uberwachung der Funktion von parallelgeschalteten Lampen**
Monitoring process and device for parallel connected lamps
Procédé et dispositif de surveillance centralisée de l'état de lampes branchées en parallèle

(30) Priorität: 19.05.1990 DE 4016162
(43) Veröffentlichungstag der Anmeldung: 27.11.1991
(73) Patentinhaber: ABB PATENT GmbH, 68309 Mannheim (DE)
(72) Erfinder: Klaas, Wilfried, W-4773 Möhnesee 13 (DE); Jütte, Reinhold, W-3538 Marsberg 9 (DE)
(74) Vertreter: Rupprecht, Klaus, Dipl.-Ing.

(56) Entgegenhaltungen:
- EP-A- 0 205 014
- EP-A- 0 347 317
- EP-A- 0 415 662
- DE-A- 3 618 790

## Beschreibung

Die Erfindung bezieht sich auf ein Verfahren zur zentralen Überwachung der Funktion von parallelgeschalteten Lampen, wobei jeder Lampe eine Abfrageschaltung zur Feststellung der Lampenfunktion und eine codierte Adresse zugeordnet ist, und wobei eine zentrale Überwachungseinheit unter Benutzung der Adressen eine Abfrage der Lampenfunktion veranlaßt. Außerdem bezieht sich die Erfindung auf eine Anordnung zur Durchführung des Verfahrens.

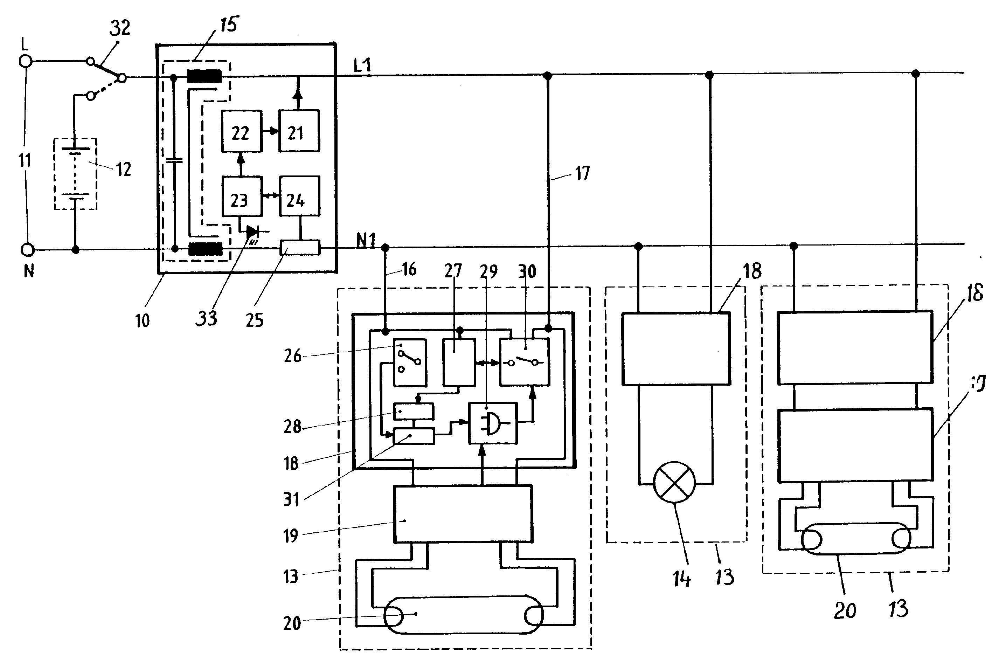

Ein Verfahren zur zentralen Lampenüberwchung wird in einem marktgängigen Produkt mit der Bezeichnung "CEWA-Guard" angewendet. Das CEWA-Guard-System wird hauptsächlich eingesetzt zur automatischen Überwachung von Lampen in Notbeleuchtungsanlagen. Das bekannte System enthält eine zentrale Überwachungseinheit und bis zu zwölf Überwachungsschaltungen, wovon je eine Überwachungsschaltung einer zu überwachenden Lampe zugeordnet ist. Üblicherweise ist jeweils eine Überwachungsschaltung und eine Lampe in einer Leuchte angeordnet. Die zentrale Überwachungseinheit ist mit den Leuchten durch zwei Energieversorgungsleitungen und eine Datenleitung verbunden, wobei als Rückleiter zur Datenübertragung eine der beiden Energieversorgungsleitungen benutzt wird. Die Notwendigkeit einer besonderen Datenleitung ist aus etz Bd. 107 (1986), Heft 6/7, Seite 272 bis 277, insbesondere Bild 7 (Datenleitungen D1, D2, D3) und zugehöriger Beschreibung, Seite 276, mittlere Spalte, ersichtlich.

In den Leuchten ist eine Abfrageschaltung enthalten, welche eine Funktionsprüfung durchführt und bei intakter Lampe ein Gut-Signal bildet. Die Übertragung dieser Information zu der zentralen Überwachungseinheit erfolgt durch zyklische Abfrage. Dazu werden Lampen-Adressen benutzt, welche aus einer je Lampe unterschiedlichen Anzahl von Impulsen besteht. In den Leuchten werden Zähler benutzt und ein Vergleicher zum Vergleich des Zählerstandes mit einer eingestellten Adresse. Die zentrale Überwachungseinheit beginnt einen Abfragezyklus durch Aufschalten einer 12V-Gleichspannung auf die Datenleitung, wodurch sämtliche Zähler in den Leuchten auf Null gesetzt werden. Anschließend werden durch periodisches Unterbrechen der Spannung Impulse gesendet, welche von den Zählern gezählt werden. Wenn ein mit der eingestellten Adresse übereinstimmender Zählerstand erreicht ist, wird von der Überwachungsschaltung in der entsprechenden Leuchte das Gut-Signal gemeldet. Dies geschieht dadurch, daß durch Zuschalten einer Belastung zur Datenleitung ein deutlich erhöhter Strom in der Datenleitung verursacht wird. Die zentrale Überwachungseinheit detektiert diesen erhöhten Strom und interpretiert ihn als Meldung einer ordnungsgemäßen Lampenfunktion.

Das an sich zufriedenstellend arbeitende bekannte System hat den Nachteil, daß drei Leitungen für den Anschluß der Leuchten benötigt werden, wodurch Installationsfehler möglich sind.

Auch ein aus IEE Conference Publication Number 181, 1979, "Automotive Electronics", Seiten 249 bis 251 bekanntes Überwachungssystem für Lampen in einem Straßenfahrzeug erfordert außer den Energieversorgungsleitungen zusätzliche Steuer- und Meldeleitungen.

Weiterhin sind aus DE-OS 34 31 099, DE-OS 36 35 682 und US 4 449 073 Flughafenbefeuerungsanlagen bekannt, deren Überwachungseinrichtungen entweder zusätzliche Leitungen oder je Lampe eine gesonderte Sendeeinrichtung zur Meldung eines detektierten Lampenzustandes erfordern.

Aus der EP-A-347 317 sind ein Verfahren und eine Einrichtung zur Abfrage eines Lampenzustandes bekannt, wobei außer den Stromversorgungsleitungen keine gesonderten Leitungen erforderlich sind. Allerdings ist eine Abfrage des Lampenzustandes erst nach Abschalten der Stromversorgung für die Lampen möglich. Diese Einschränkung ist für Notbeleuchtungsanlagen, die oftmals mit Dauerbetrieb der Lampen arbeiten, nicht hinnehmbar. Das Verfahren arbeitet mit der Sendung einiger Perioden eines niederfrequenten Wechselstromsignals durch eine Zentrale, wobei die Periodenzahl zur Adressierung benutzt wird. Eine Gut-Meldung der Lampe erfolgt durch eine Stromerhöhung während einer Halbwelle, wodurch sich eine geringfügige Asymmetrie des Stromsignals ergibt, die in der Zentrale mit einer relativ aufwendigen Einrichtung detektiert wird.

Der Erfindung liegt die Aufgabe zugrunde, ein Verfahren und eine Anordnung zur zentralen Überwachung der Funktion von parallelgeschalteten Lampen anzugeben, wobei keine gesonderten Meldeleitungen benötigt werden und trotzdem eine Abfrage während des Lampenbetriebs möglich ist.

Diese Aufgabe wird gelöst durch ein Verfahren zur zentralen Überwachung der Funktion von über Energieversorgungsleitungen parallelgeschalteten Lampen, wobei
- jeder Lampe eine Abfrageschaltung zur Feststellung der Lampenfunktion und eine codierte Adresse zugeordnet ist,
- eine zentrale Überwachungseinheit unter Benutzung der Adressen eine Abfrage der Lampenfunktion veranlaßt, und
- durch Änderung des Stromes eines Abfragesignals eine Meldung des Lampenzustandes erfolgt, und die Stromänderung in der zentralen Überwachungseinheit detektiert und nach Verknülfung mit der Lampenadresse eine Lampenzustandsmeldung angezeigt oder an eine übergeordnete Einrichtung gemeldet wird,

und wobei von der zentralen Überwachungseinheit in die Energieversorgungsleitungen ein hochfrequentes Trägersignal eingespeist wird, welchem zur Abfrage der festgestellten Lampenfunktionen nacheinander die codierten Adressen mit Hilfe von tonfrequenten Impulsen aufmoduliert werden und von der dadurch ausgewählten Abfrageschaltung jeweils eine Meldung der von der Abfrageschaltung festgestellten ordnungsgemäßen Lampenfunktion durch kurzzeitige Belastung des Trägersignals, also Erhöhung des Trägersignalstromes, an die zentrale Überwachungseinheit durchgeführt wird, wobei die Stromerhöhung in der zentralen Überwachungseinheit erfaßt und mit der Adresse verknüpft wird.

Vorteilhafte Ausgestaltungen sind in Unteransprüchen angegeben.

Die erfindungsgemäße Lösung hat den Vorteil, daß nur zwei Leitungen zum Anschluß der Leuchten, nämlich die übichen Energieversorgungsleitungen erforderlich sind. Anschlußfehler sind dadurch ausgeschlossen.

Die im Patentanspruch 6 angegebene Anordnung hat den Vorteil, daß die elektronischen Schaltungsteile für eine Fernüberwachung und ein Vorschaltgerät in kompakter Form im Sockel einer Leuchtstofflampe untergebracht werden können. Es sind keine zusätzlichen Leitungen zur Überwachung erforderlich. Die Lampenadresse kann z.B. mittels Adressierschalter am Lampensockel eingestellt werden.

Die Erfindung wird nachstehend anhand der Zeichnung, in der ein Ausführungsbeispiel dargestellt ist, näher erläutert.

Die Zeichnung zeigt eine Anordnung von Leuchten 13, welche in Parallelschaltung mit Hilfe von Anschlußleitungen 16, 17 an Leitungen L1, N1 zur Energieversorgung angeschlossen sind. Die Leuchten 13 enthalten entweder Glühlampen 14 oder Leuchtstofflampen 20, wobei Leuchtstofflampen 20 jeweils über ein elektronisches Vorschaltgerät 19 an die Leitungen L1, N1 angeschlossen sind.

In die Leitungen L1, N1 wird unter Zwischenschaltung einer zentralen Überwachungseinheit 10 mit Hilfe einer Umschalteinrichtung 32 entweder eine Gleichspannung aus einer Batterieanlage 12 oder eine Wechselspannung über mit L und N bezeichnete Netzanschlußklemmen 11 eingespeist.

Die zentrale Überwachungseinheit 10 bildet zusammen mit Überwachungsschaltungen 18, welche in jeder Leuchte 13 angeordnet sind, eine Überwachungseinrichtung zur Überwachung der Funktion der Lampen 14, 20.

Die Überwachungseinrichtung 10, 18 führt in zyklischer Folge nacheinander eine Überprüfung der Lampen 14, 20, im Falle von Leuchtstofflampen 20 einschließlich des Vorschaltgerätes 19, durch. Den Leuchten sind zu diesem Zweck Adressen zugeordnet, die als Impulsfolge codiert von der zentralen Überwachungseinheit 10 zu den Überwachungsschaltungen 18 in den Leuchten 13 übertragen werden. Die Übertragung der Adressen erfolgt mit Hilfe von tonfrequenten Impulsen, welche einer trägerfrequenten Spannung überlagert werden. Die trägerfrequente Spannung wird mit einem Trägerfrequenzgenerator 21 erzeugt, der in der zentralen Überwachungseinheit 10 angeordnet ist. Die trägerfrequente Spannung wird als andauerndes Trägersignal ohne zeitliche Unterbrechung in die Leitungen L1, N1 eingespeist.

Ein in der zentralen Überwachungseinheit 10 angeordneter Adresstimer 23 steuert die Folge der Lampenprüfungen. In einem ersten Zeitabschnitt erfolgt also eine Prüfung einer ersten Lampe 14, 20, in einem zweiten Abschnitt eine Prüfung einer zweiten Lampe 14, 20 usw.. Im ersten Zeitabschnitt benutzt der Adresstimer 23 die gespeicherte Adresse der ersten Lampe 14, 20 und steuert mit Hilfe eines Modulators 22 eine Überlagerung der tonfrequenten Impulse auf dem Trägersignal, welche der ersten Adresse entsprechen.

Die Überwachungsschaltungen 18 in den Leuchten 13 enthalten jeweils einen Trägerfrequenzempfänger 27 mit Demodulator, der empfangene Impulse an einen Adressenempfänger 28 abgibt, der z.B. mit einem digitalen Zähler arbeiten kann. Soweit ein Zähler im Adressenempfänger 28 verwendet wird, muß für eine Rücksetzung des Zählers vor einem Zählvorgang gesorgt werden. Dies kann beispielsweise durch Sendung eines dem Trägersignal aufmodulierten Rücksetzbefehls durch die zentrale Überwachungseinheit 10 am Beginn eines Abfragezyklusses geschehen. Weiterhin enthält die Überwachungsschaltung 18 einen Vergleicher 31, der die mit Hilfe eines Codierschalters 26 an der Leuchte 13 in den Vergleicher 31 eingegebene und dort gespeicherte Adresse der jeweiligen Lampe 14, 20 enthält und einen Vergleich mit der im Adressenempfänger 28 vorliegenden Adresse durchführt. Bei Adressenübereinstimmung gibt der Vergleicher 31 ein Steuersignal an eine Abfrageschaltung 29 ab.

Die Abfrageschaltung 29 führt selbsttätig eine Prüfung der Lampenfunktion, gegebenenfalls einschließlich der Funktion des Vorschaltgerätes 19 durch und erzeugt bei funktionierender, d.h. brennender Lampe 14, 20, ein Bestätigungssignal, das sie mit dem Steuersignal aus dem Vergleicher 31 verknüpft. Wenn die richtige Adresse empfangen wurde und die Lampe 14, 20 funktioniert, gibt die Abfrageschaltung 29 ein Befehlssignal an eine Belastungsstufe 30.

Das Trägersignal wird nicht nur zur Übertragung von tonfrequenten Adressenimpulsen benutzt, wie beschrieben, sondern auch für die Meldung des Zustandes der Lampe. Dies geschieht durch kurzzeitige deutliche Erhöhung des trägerfrequenten Stromes auf den Leitungen L1, N1 mit Hilfe der Belastungsstufe 30. Die Belastungsstufe 30 kann beispielsweise aus einem über einen Halbleiterschalter zuschaltbaren Kondensator als Belastung bestehen, wobei der Halbleiterschalter vom Befehlssignal der Abfrageschaltung 29 angesteuert wird. Der Kondensator wird zweckmäßig so dimensioniert, daß nach seiner Zuschaltung der trägerfrequente Strom um ein Mehrfaches erhöht wird. Die niederfrequente Versorgungsspannung der Lampen wird durch den Scheinwiderstand des Kondensators praktisch nicht belastet.

Der zum Zweck der Rückmeldung der Lampenfunktionstüchtigkeit kurzzeitig erhöhte trägerfrequente Strom wird in der zentralen Überwachungseinheit 10 mit Hilfe eines Shunts 25 und einer Auswerteeinrichtung 24 detektiert. Die Auswerteeinrichtung 24 gibt ein Rückmeldesignal an den Adresstimer 23, der das Rückmeldesignal mit der Adresse verknüpft und eine Anzeigeeinrichtung 33 ansteuert.

Die zentrale Überwachungseinheit 10 enthält eingangsseitig eine Filterschaltung 15, die als Trägerfrequenzsperre wirkt und verhindert, daß das Trägersignal in die einspeisende Spannungsquelle 11, 12 abfließen kann.

Das vorstehend anhand der Zeichnung erläuterte Verfahren kann auf verschiedene Weise variiert werden, beispielsweise hinsichtlich der Initiierung eines Funktionstests, der Art der Adressierung oder der Durchführung der Meldung des Lampenzustandes.

Ein Funktionstest kann durch eine übergeordnete Steuereinheit initiiert werden oder durch eine zeitabhängige Steuerung in der zentralen Überwachungseinheit 10. Auch eine andauernde zyklische Überprüfung des Lampenzustandes ist möglich.

Zur Adressierung kann wie beim eingangs beschriebenen Stand der Technik einfach eine je Lampe unterschiedliche Anzahl von Impulsen benutzt werden, aber auch eine auf andere Weise codierte Adresse.

Die zur Rückmeldung des Lampenzustands vorgesehene Erhöhung des hochfrequenten Trägersignalstromes kann durch einen Saugkreis, also einen auf die Trägerfrequenz abgestimmten Serienresonanzkreis anstelle durch Zuschalten eines Kondensators bewirkt werden.

Anstelle des beschriebenen Verfahrens zur Rückmeldung des Lampenzustands durch Belastung der Trägersignalquelle kann auch die in Leuchten mit elektronischen Vorschaltgeräten für Leuchtstofflampen ohnehin vorhandene hohe Arbeitsfrequenz benutzt werden.

Der in der zentralen Überwachungseinheit 10 erfaßte Zustand der parallelgeschalteten Lampen 14, 20 kann an der zentralen Überwachungseinheit 10 angezeigt werden oder auch zu einer übergeordneten Einrichtung gemeldet werden.

## Patentansprüche

1. Verfahren zur zentralen Überwachung der Funktion von über Energieversorgungsleitungen (L1,N1) parallelgeschalteten Lampen (14;20), wobei
- jeder Lampe eine Abfrageschaltung (29) zur der Feststellung der Lampenfunktion und eine codierte Adresse zugeordnet ist,
- eine zentrale Überwachungseinheit (10) unter Benutzung der Adressen eine Abfrage der Lampenfunktion veranlaßt, und
- durch Änderung des Stromes eines Abfragesignals eine Meldung des Lampenzustandes erfolgt, und die Stromänderung in der zentralen Überwachungseinheit (10) detektiert und nach Verknüpfung mit der Lampenadresse eine Lampenzustandsmeldung angezeigt oder an eine übergeordnete Einrichtung gemeldet wird,
dadurch gekennzeichnet, daß von der zentralen Überwachungseinheit (10) in die Energieversorgungsleitungen (L1,N1) ein hochfrequentes Trägersignal eingespeist wird, welchem zur Abfrage der festgestellten Lampenfunktionen nacheinander die codierten Adressen mit Hilfe von tonfrequenten Impulsen aufmoduliert werden und von der dadurch ausgewählten Abfrageschaltung (29) jeweils eine Meldung der von der Abfrageschaltung (29) festgestellten ordnungsgemäßen Lampenfunktion durch kurzzeitige Belastung des Trägersignals, also Erhöhung des Trägersignalstromes, an die zentrale Überwachungseinheit (10) durchgeführt wird, wobei die Stromerhöhung in der zentralen Überwachungseinheit (10) erfaßt und mit der Adresse verknüpft wird.

2. Verfahren nach Anspruch 1, dadurch gekennzeichnet, daß die Erhöhung des Trägersignalstromes durch Zuschalten eines auf die Trägerfrequenz abgestimmten Serienresonanzkreises an die Energieversorgungsleitungen (L1, N1) bewirkt wird.

3. Verfahren nach Anspruch 1, dadurch gekennzeichnet, daß die Erhöhung des Trägersignalstromes durch Zuschalten eines Kondensators an die Energieversorgungsleitungen (L1, N1) bewirkt wird.

4. Verfahren nach einem der Ansprüche 1 bis 3, dadurch gekennzeichnet, daß die überwachten Lampen Glühlampen oder Leuchtstofflampen sind.

5. Verfahren nach einem der vorstehenden Ansprüche, dadurch gekennzeichnet, daß mit Hilfe eines digitalen Zählers in einer den Lampen jeweils zugeordneten Überwachungsschaltung (18) eine übertragene Adresse festgestellt wird.

6. Anordnung zur Durchführung des Verfahrens nach einem der Ansprüche 1 bis 5, wobei eine zentrale Überwachungseinheit und je Lampe eine elektronische Abfrage- und Meldeeinrichtung angeordnet ist, dadurch gekennzeichnet, daß die zur zentralen Überwachung lampenseitig erforderlichen Einrichtungen in einer Überwachungsschaltung (18) zusammengefaßt und gemeinsam mit einem elektronischen Vorschaltgerät (19) im Schraub- oder Stecksockel einer Leuchtstofflampe (20) eingebaut sind.

## Claims

1. Method for the central monitoring of the operation of lamps (14;20) which are connected in parallel via power supply lines (L1, N1),
- each lamp being assigned an interrogation circuit (29), for determining the operation of the lamp, and an encoded address,
- a central monitoring unit (10) initiating an interrogation of the operation of the lamps using the addresses, and
- a report of the lamp status being carried out by changing the current of an interrogation signal, and the change in current in the central monitoring unit (10) being detected and after combination with the lamp address a lamp status report being indicated or reported to a higher ranking device,
characterized in that a high-frequency carrier signal is fed into the power supply lines (L1, N1) by the central monitoring unit (10), on which high-frequency carrier signal the encoded addresses are successively modulated with the aid of sound-frequency pulses in order to interrogate the detected operation of the lamps, and in each case a report of the satisfactory operation of the lamps detected by the interrogation circuit (29), to the central monitoring unit (10) is carried out by means of the brief loading of the carrier signal, that is to say the increasing of the carrier signal current, by the interrogation circuit (29) which is selected in this way, the increase in current in the central monitoring unit (10) being detected and combined with the address.

2. Method according to Claim 1, characterized in that the increase in the carrier signal current is brought about by connecting to the power supply lines (L1, N1) a series resonance circuit which is tuned to the carrier frequency.

3. Method according to Claim 1, characterized in that the increase in the carrier signal current is brought about by connecting a capacitor to the power supply lines (L1, N1).

4. Method according to one of Claims 1 to 3, characterized in that the monitored lamps are incandescent lamps or fluorescent lamps.

5. Method according to one of the preceding claims, characterized in that a transmitted address is detected with the aid of a digital counter in a monitoring circuit (18) which is assigned to the lamps in each case.

6. Arrangement for carrying out the method according to one of Claims 1 to 5, a central monitoring unit and one electronic interrogation and reporting device per lamp being arranged, characterized in that the devices which are required on the lamp side for central monitoring are combined in a monitoring circuit (18) and are installed together with an electronic ballast (19) in the screw-in or plug-in base of a fluorescent lamp (20).

## Revendications

1. Procédé pour la surveillance centralisée du fonctionnement de lampes (14, 20) branchées en parallèle par l'intermédiaire de lignes d'alimentation en énergie (L1, N1),
- un circuit d'interrogation (29) permettant de déterminer si la lampe fonctionne et une adresse codée étant associée à chaque lampe,
- une unité de surveillance (10) centrale déclenchant l'interrogation pour connaître l'état de fonctionnement de la lampe en utilisant les adresses et
- une information sur l'état de la lampe étant délivrée par modification du courant du signal d'interrogation, et la modification du courant étant détectée dans l'unité de surveillance (10) et, après combinaison avec l'adresse de la lampe, une information sur l'état de la lampe étant délivrée ou transmise à un dispositif hiérarchiquement supérieur,
caractérisé par le fait l'unité de surveillance (10) centrale envoie dans les lignes d'alimentation en énergie (L1, N1) un signal de porteuse à haute fréquence sur lequel, à des fins d'interrogation sur l'état de fonctionnement constaté des lampes, on surmodule successivement les adresses codées au moyen d'impulsions à basse fréquence et que le circuit d'interrogation (29) sélectionné délivre chaque fois à l'unité de surveillance (10) centrale une information de fonctionnement correct de la lampe constaté par ledit circuit d'interrogation (29) par chargement de courte durée du signal de porteuse, c'est-à-dire par élévation du courant de signal de porteuse, l'élévation de courant étant constatée dans l'unité de surveillance (10) centrale et combinée à l'adresse.

2. Procédé selon la revendication 1, caractérisé par le fait que l'élévation du courant du signal de porteuse est obtenue par la connexion aux lignes d'alimentation en énergie (L1, N1) d'un circuit de résonance série adapté à la fréquence de la porteuse .

3. Procédé selon la revendication 1, caractérisé par le fait que l'élévation du courant du signal de porteuse est obtenue par la connexion d'un condensateur aux lignes d'alimentation en énergie (L1, N1).

4. Procédé selon l'une des revendication 1 à 3, caractérisé par le fait que les lampes surveillées sont des lampes à incandescence ou des lampes à fluorescence.

5. Procédé selon l'une des revendications 1 à 3, caractérisé par le fait que l'on détecte une adresse transmise au moyen d'un compteur numérique appartenant à un circuit de surveillance (18) associé aux lampes.

6. Dispositif pour la mise en oeuvre du procédé selon l'une des revendications 1 à 5, dans lequel il est prévu une unité de surveillance centrale et un dispositif électronique d'interrogation et d'information associé à chacune des lampes, caractérisé par le fait que les dispositifs nécessaires côté lampe pour la surveillance centralisée sont regroupés dans un circuit de surveillance et, avec un ballast électronique (19), sont montés dans le culot à baïonnette ou à vis d'une lampe à fluorescence (20).
